# EUROPEAN PATENT APPLICATION

(11) **EP 4 581 929 A1**
(43) Date of publication of application: **09.07.2025**
(21) Application number: 24817032.6
(22) Date of filing: 17.07.2024
(51) Int. Cl.: A01K 85/14, A01K 85/00

(54) **METALLIC LURE**

(30) Priority: 14.11.2023 JP 2023193398
(71) Applicant: Aomori Hoei Industries, Ltd., Kamita-gun, Aomori 039-3214 (JP)
(72) Inventor: HARA, Satoshi, Aomori 039-3214 (JP)
(74) Representative: Gislon, Gabriele
(86) International application number: PCT/JP2024/025559
(87) International publication number: WO 2025/104973

(57) **Abstract**

To propose a welding structure that ensures sufficient strength when a line eye or a hook eye for attaching a fishing line or a fishing hook is welded to a body. Further to propose a metal lure that is environmentally friendly even when left in water or seawater.

A metal lure for use in lure fishing, the metal lure comprising: a body, an eye for attaching a fishing line or a fishing hook, wherein the body is provided with an eye installation groove to accommodate the eye, wherein the eye is attached to the body by welding while being accommodated in the eye installation groove, wherein a material of the body and the eye is martensitic stainless steel or ferritic stainless steel.

## Description

### TECHNICAL FIELD

The present invention relates to metal lures used for lure fishing, and more particularly to metal lures in which an eye to which a fishing line or a fishing hook is attached is welded to a body.

### BACKGROUND OF THE INVENTION

Various types of lures are commercially available for lure fishing, from those that swim in shallow area near the water surface to those that swim in deep area near the bottom of lakes and seabeds. Lures are used according to the depth at which the targeted fish live. Lures are composed using a variety of materials, from those lighter than the specific gravity of water to metals larger than the specific gravity of water.

In terms of the water depth at which the lure is used, a lure designed for shallow area is called a shallow type, while a lure designed for deep area is called a deep type. Here, in rivers, oceans, lakes, areas with shallow water depths are called shallow area, and areas with deep water depths are called deep area. Lures called metal jigs, which are made entirely of metals such as lead, iron, tungsten, and aluminum, are heavy and have excellent long casting performance because the inside is also made of metal. Another advantage is that metal jigs are both strong and durable. Metal jigs have a high specific gravity, so they sink quickly after hitting the water and are often used below the water surface or in deep area.

Here, there are various methods of fixing the line eye for attaching a fishing line to the body of the lure. Patent Document 1 shows the structure of a lure having a main body made of resin. Patent Document 1 discloses a structure that is composed of a resin member that constitutes the main body of the lure and a metal plate that is attached to the abdomen of the main body. The fishing line attachment portion for attaching a fishing line is formed integrally with this metal plate by welding or other methods.

Patent Document 2 shows the structure of a lure having a metal main body. The lure main body 11 only needs to be made of a hard material that has strength enough to withstand casting, has a specific gravity greater than that of water. The lure main body 11 is preferably made of metal material, most preferably is adopted stainless steel, which is rust-free, harmless and durable. The fishing line attachment portion 2 is required to have a strength sufficient to connect the fishing line to the lure main body 11 during casting and to hold the fishing target. For example, the fishing line attachment portion 2 is made of a metal material such as stainless steel, and the fishing line attachment portion 2 and the lure main body 11 are connected by welding.

### PRIOR ART

### PATENT LITERATURES

Patent Document 1: JP2000-245305A
Patent Document 2: JP2015-084670A

### SUMMARY OF THE INVENTION

### PROBLEMS TO BE SOLVED BY THE INVENTION

Patent Documents 1 and 2 only state that the line eye is fixed to the body by welding as a method for fixing the line eye for attaching the fishing line to the body. However, since metal lures are primarily used for long-distance casting, the connection between the line eye and the heavy body must be sufficiently strong. Furthermore, metal lures are often made of stainless steel, which is rust-free, harmless, and durable, as described in Patent Document 2. However, it is environmentally problematic for lures that are left in water or seawater due to snagging, etc., to remain there almost permanently.

The present invention has been made in order to deal with the above problems. That is, the object is to propose a welded structure that ensures sufficient strength between the line eye and the body, and further to propose a metal lure that is environmentally friendly even when left in water or seawater.

### MEANS FOR SOLVING THE PROBLEMS

(1) In order to solve the above problems, the present invention relates a metal lure for use in lure fishing, the metal lure comprising:
   a body,
   an eye for attaching a fishing line or a fishing hook,
   wherein the body is provided with an eye installation groove to accommodate the eye,
   wherein the eye is attached to the body by welding while being accommodated in the eye installation groove.
   By providing an eye installation groove to accommodate an eye in the body of the metal lure of the present invention, the eye can be welded while being accommodated and held in a predetermined position on the body. This makes the welding work easier. Furthermore, welding can be performed with the positional relationship between the eye and the body always constant. This allows the welded part of each metal lure to have a uniform appearance and a clean circle shape. Therefore, the quality of the welding for each metal lure can be kept consistent.
(2) In the above (1), the shape of the eye before welding is U-shaped, and both ends of the U-shaped eye have portions that serve as a filler metal when welding the eye to the body.
   The end of the eye serves as filler metal that joins the eye to the body, so that the welding operation becomes easier, and a clean circular welded part can be made.
(3) In the above (1), the eye installation groove is formed by a press die.
   The eye installation groove can also be manufactured using a lathe, milling machine, etc. However, by using a press die, it is possible to efficiently provide a uniform eye installation groove in the body.
(4) In the above (1), a material of the body and the eye is martensitic stainless steel or ferritic stainless steel.
   Stainless steel is often used as the material for metal lures. This is because stainless steel has high corrosion resistance, does not rust easily even when used in water or seawater, and is easy to process. On the other hand, if a metal lure becomes snagged during fishing and is left in water or seawater, it will remain there almost permanently, causing environmental problems. There are three types of stainless steel: austenitic, martensitic, and ferritic. The austenitic type has the highest corrosion resistance. Martensite and ferritic alloys have lower corrosion resistance than austenitic alloys, so if left in water or seawater, they will eventually rust and disappear. Martensitic and ferritic stainless steel metal lures can be in line with environmentally conscious users.

### ADVANTAGES OF THE INVENTION

According to the present invention, in the production of a metal lure, by providing an eye installation groove in the body for accommodating an eye, it is possible to weld the lure while the eye is held in the eye installation groove. This makes the welding work easier and allows the welding quality to be consistent for each metal lure. Furthermore, by using martensitic or ferritic stainless steel as the material for the metal lure, it can be made to be in line with environmentally conscious users.

### BRIEF DESCRIPTION OF THE DRAWINGS

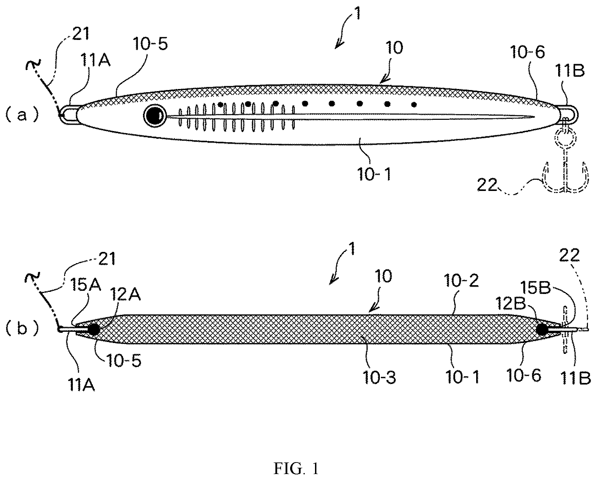

Figure 1a shows a front view of a metal lure according to one embodiment of the present invention, and Figure 1b shows a plan view of the metal lure of Figure 1a.

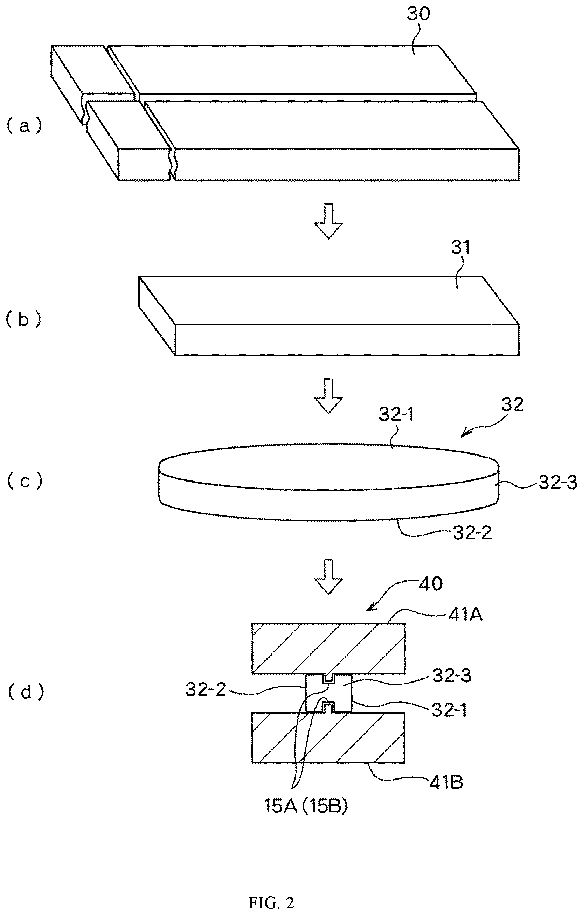

Figure 2a is a perspective view of a plate material for a metal lure of the present invention,
Figure 2b is a perspective view of a cutting material for one metal lure cut from the plate material of Figure 2a, Figure 2c is a perspective view of a long elliptical processed material processed into a fish shape from the cutting material of Figure 2b, and Figure 2d is a schematic diagram showing how an eye installation groove is formed in the side part of the long elliptical processed material of Figure 2c using a press die.

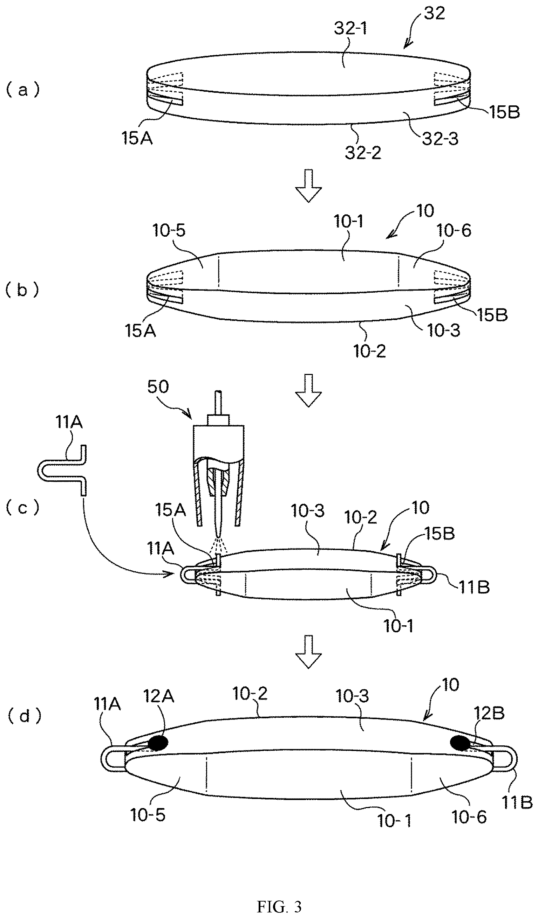

Figure 3a is a perspective view of the long elliptical processed material with an eye installation groove on the side part using the press die of Figure 2d; Figure 3b is a perspective view of a body completed by chamfering the head and tail parts on the surface and back parts of the long elliptical processed material of Figure 3a; Figure 3c is a schematic diagram showing the state in which an eye is accommodated in the eye installation groove of the body of Figure 3b and the eye is welded with a TIG welding machine; and Figure 3d is a diagram showing a metal lure before painting.

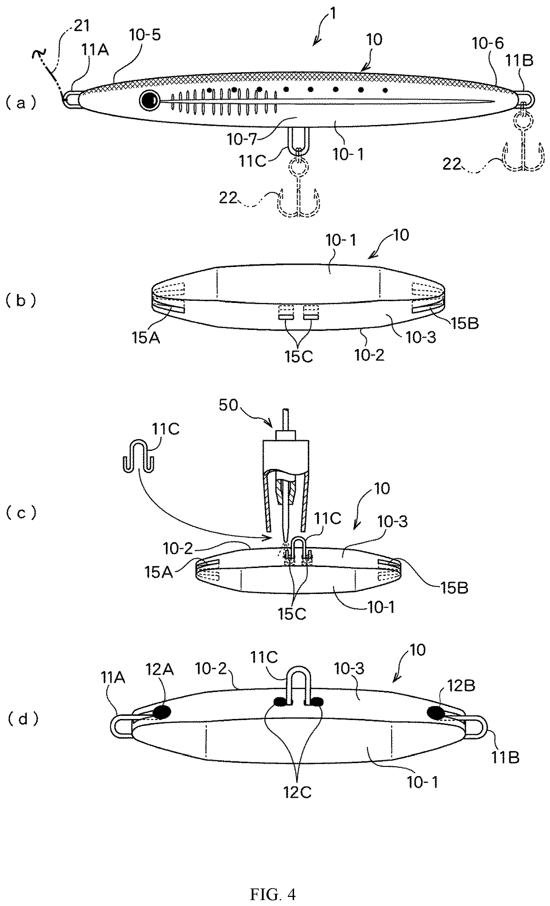

Figure 4a is a front view of a metal lure of another example of the present invention, Figure 4b is a perspective view of the completed body of another example of the invention, Figure 4c is a schematic diagram showing the state in which the eye is accommodated in the eye installation groove on the side part of the abdomen of the body in Figure 4b and the eye is welded with a TIG welder, Figure 4d is a diagram showing the metal lure according to another example of the present invention before painting.

### EMBODIMENTS OF THE INVENTION

The following is a description of the embodiment of the metal lure of the present invention with reference to the drawings. In each drawing, similar parts are marked with the same reference sign.

Figure 1a shows a front view of a metal lure according to one embodiment of the present invention. As shown in Figure 1a, the metal lure 1 comprises at least a metal body 10, a line eye 11A for attaching a fishing line 21, and a hook eye 11B for attaching a fishing hook 22. A surface part 10-1 and a back part 10-2 of the body 10 (see Figure 1b) are shaped to resemble a fish so as to serve as an artificial bait, i.e., a lure. Each side of the surface part 10-1 and the back part 10-2 is painted with a fish pattern.

The line eye 1 1Aand the hook eye 11B are similar in shape to the letter U of the alphabet. Before they are welded to the body 10, both ends of the U-shaped eye extend laterally (see Figure 3c). These laterally extending parts serve as a filler metal when welding the line eye 11A and the hook eye 11B to the body 10. In Figure 1a, one line eye 11A and one hook eye 11B are provided on a head part 10-5 and a tail part 10-6 of the body 10, respectively. The shape of the line eye 11A and the hook eye 11B may be a shape similar to the Greek letter II or Ω.

Figure 1b shows a plan view for the metal lure 1 of the present invention. Since the metal lure 1 of the present invention is manufactured by cutting a metal plate material, the side part 10-3 has the same thickness as the metal plate material, except for the head part 10-5 and the tail part 10-6. The line eye 11A is welded to the head part 10-5 in a state where it is accommodated in an eye installation groove 15A. The welded part 12A has a clean circular shape with a slight protrusion in the center. The hook eye 11B is welded to the tail part 10-6 in a state where it is accommodated in an eye installation groove 15B. The welded part 12B has a clean circular shape with a slight protrusion in the center. The operation of welding the line eye 11A to the body 10 will be described below using Figure 3c.

An example of a manufacturing process for the metal lure 1 of the present invention is described below with reference to Figures 2a through 3d.

Figure 2a shows a commercially available plate material 30 for manufacturing a metal lure 1. The size of the plate material 30 is, for example, 1000 mm in length, 2000 mm in width, and 10 mm in thickness. The thickness of the metallic lure 1, that is, the thickness of the side part 10-3, may be adjusted to the thickness of a commercially available product. Generally, commercially available plate material thicknesses are available in 1 mm increments up to 10 mm, and above 10 mm, thicknesses of 12, 15, 16, 18, and 20 mm are available.

Figure 2b shows a cutting material 31 sized to produce one metal lure 1. The size of the cutting material 31 is, for example, 20 mm in length, 170 mm in width, and 10 mm in thickness. The cutting material 31 is cut out from the plate material 30 by shearing, sawing, or the like. Shearing is a method that works on the same principle as cutting paper with scissors, in which the material is pressed against a back gauge positioned to the cutting dimensions and the upper blade is lowered to cut it. Sawing is a method of cutting materials by rotating a circular saw blade with an electric motor.

The material of the metal lure 1 can be selected from lead, zinc, tin, brass, stainless steel, iron, titanium, tungsten, etc. Stainless steel is often used because it has no impact on the ecosystem and is less likely to cause rusting problems. There are three types of stainless steel: austenitic, martensitic, and ferritic. The austenitic type has the highest corrosion resistance. Martensitic and ferritic alloys have lower corrosion resistance than austenitic alloys. Therefore, if a lure is left in the water or seawater while fishing, e.g., due to snagging, it will eventually rust and disappear. Metal lures made of martensitic and ferritic stainless steel can be said to be in line with environmentally conscious users. Specific examples of martensitic stainless steel include SUS403, 410, and 420, while specific examples of ferritic stainless steel include SUS430 and 410L.

Figure 2c shows a long elliptical processed material 32 processed into a fish shape from the cutting material 31. In the long elliptical processed material 32, a side part 32-3, which is the thick part, remains the same thickness as the plate material 30, while a surface part 32-1 and a back part 32-2, which are the sides of the fish's body, are processed into a long elliptical shape resembling the shape of a fish.

Figure 2d shows a state in which the side part 32-3 of the long elliptical processed material 32 is provided with the eye installation groove 15A (15B) by the press die 40. The press die 40 is divided into two parts, upper die 41A and lower die 41B, between which the side part 32-3 of the long elliptical processed material 32 is placed and the side part 32-3 is pressed from above and below. The eye installation groove 15A (15B) can accommodate the eye 11A (11B) in a fixed position on the body 10 when the eye 11A (11B) is welded to the body 10 (see Figure 3c). This makes welding easier and allows the welding quality to be consistent for each lure, including the attachment position of the eye to the body. The eye mounting groove 15A (15B) can also be fabricated using a lathe, milling machine, or the like. However, considering the small grooves and fabrication time, it is most efficient to use a press die.

Figure 3a shows eye installation grooves 15A and 15B on the side part 32-3 of the long elliptical processed material 32 by the press die 40. When the eye installation grooves 15A, 15B accommodate the eyes 11A, 11B, it is desirable that the bottom of the eye installation groove is made wide enough so that the body of the U-shaped eye expands slightly, and the eyes 11A, 11B are supported by the eye installation grooves 15A, 15B. This prevents the eye from moving during welding operations or falling out of the eye installation groove.

Figure 3b shows a completed body 10 with the head part 10-5 and tail part 10-6 chamfered on the surface part 32-1 and back part 32-2 of the long elliptical processed material 32. The chamfering of the head part 10-5 and the tail part 10-6 is to make the shape of the metal lure 1 more like a fish.

Figure 3c shows the state in which the eyes 11A, 11B are accommodated in the eye installation grooves 15A, 15B of the body 10 and each eye is welded with a TIG welding machine 50. In Figure 3c, the portion of the eye that serves as the filler metal for welding the eye extends from both ends of the U-shaped eye at approximately right angles. This shape is such that when the eyes 11A, 11B are accommodated in the eye installation grooves 15A, 15B, the portion of the eye that serves as the filler metal when welding the eyes faces the TIG welding machine 50. This condition allows the arc of the TIG welding machine 50 to be efficiently concentrated on the portion that serves as the filler metal. This allows the weld to be finished as a clean circular welded part. A total of four welds are made, two at eye 11A and two at eye 11B, to create one metal lure.

Figure 3d shows a metal lure with eyes 11A, 11B attached to body 10 by TIG welding before painting. After this, the surface is painted to make the finished product. Painting of metal lures is done by undertreating and main painting. For undertreating, in order to improve paint adhesion, for example, an outer surface of the lure is polished to roughen it appropriately or applying a primer to the outer surface. Next, the main painting is done, for example by painting a logo or pattern on the surface of the lure with urethane paint, and attaching eyeballs with epoxy adhesive. The metal lure 1 is completed by the undertreating and the main painting.

Figure 4a shows the metal lure of another example of the present invention. In this another example, one more location for attaching the fishing hook 22 is added to the side part 10-3 of the abdomen 10-7.

Figure 4b shows an eye installation groove 15C for hook eye 11C in the side part 10-3 of the abdomen 10-7. The eye installation groove 15C has two grooves to accommodate both ends of the U-shaped eye of the hook eye 11C (see Figure 4c). The eye installation groove 15C is formed on the side part 10-3 of the abdomen 10-7 of the body 10 using the press die in the same manner as the other eye installation grooves 15A and 15B.

Figure 4c shows the state in which the hook eye 11C is accommodated in the eye installation groove 15C of the body 10 and the hook eye 11C is welded with a TIG welding machine 50. The portions that serve as the filler metal face upward in a U-shape at both ends of the inverted U-shaped hook eye 11C. The arc of the TIG welding machine 50 is concentrated on this U-shaped portion faceing upward to form the clean circular welded part.

Figure 4d shows a metal lure before painting, with eyes 11A, 11B, and 11C attached to the side part 10-3 of the body 10 by TIG welding. After this, the surface is painted to make the finished product. In another example of the present invention, two hook eyes are provided, but three or more may be provided, and the positions of the hook eyes may be freely selected.

### REFERENCE SIGNS LIST

1 metal lure
10 body
10-1 surface part
10-2 back part
10-3 side part
10-5 head part
10-6 tail part
10-7 abdomen
11A line eye
11B, 11C hook eye
12A, 12B, 12C welded part
15A, 15B, 15C eye installation groove
21 fishing line
22 fishing hook
30 plate material
31 cutting material
32 long elliptical processed material
32-1 surface part
32-2 back part
32-3 side part
40 press die
41A upper die
41B lower die
50 TIG welding machine

## Claims

1. A metal lure for use in lure fishing, the metal lure comprising:
a body,
an eye for attaching a fishing line or a fishing hook,
wherein the body is provided with an eye installation groove to accommodate the eye,
wherein the eye is attached to the body by welding while being accommodated in the eye installation groove.

2. The metal lure according to claim 1, wherein the shape of the eye before welding is U-shaped, and both ends of the U-shaped eye have portions that serve as a filler metal when welding the eye to the body.

3. The metal lure according to claim 1, wherein the eye installation groove is formed by a press die.

4. The metal lure according to claim 1, wherein a material of the body and the eye is martensitic stainless steel or ferritic stainless steel.
